(19) Europäisches Patentamt
European Patent Office
Office européen des brevets

(11) **EP 4 624 914 A1**

(12) **EUROPEAN PATENT APPLICATION**
published in accordance with Art. 153(4) EPC

(43) Date of publication:
**01.10.2025 Bulletin 2025/40**

(21) Application number: 23894464.9

(22) Date of filing: **13.11.2023**

(51) International Patent Classification (IPC):
*G01N 27/30* (2006.01)     *B32B 9/00* (2006.01)
*B32B 9/04* (2006.01)      *B32B 15/04* (2006.01)
*B32B 15/08* (2006.01)     *B32B 27/06* (2006.01)

(52) Cooperative Patent Classification (CPC):
**B32B 9/00; B32B 9/04; B32B 15/04; B32B 15/08; B32B 27/06; G01N 27/30**

(86) International application number:
**PCT/JP2023/040725**

(87) International publication number:
**WO 2024/111455 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.11.2022   JP 2022185810**

(71) Applicant: Nitto Denko Corporation
Ibaraki-shi
Osaka 567-8680 (JP)

(72) Inventors:
• **KATAGIRI, Masayoshi**
  **Ibaraki-shi, Osaka 567-8680 (JP)**
• **TOSHIMA, Ayaka**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **ELECTRODE AND ELECTROCHEMICAL MEASUREMENT SYSTEM**

(57)     An electrode 1 includes a substrate film 2, a niobium layer 3, and a conductive carbon layer 4 in order toward one side in a thickness direction. The niobium layer 3 has a thickness of 5 nm or more. The electrode 1 is an electrode for electrochemical measurement. An electrochemical measurement system 10 includes the electrode 1.

FIG. 1

**Description**

TECHNICAL FIELD

The present invention relates to an electrode and an electrochemical measurement system.

BACKGROUND ART

An electrode including a substrate, a metal underlying layer, and a conductive carbon layer is known (for example, see Patent Document 1 below). In Patent Document 1, as examples of the material of the metal underlying layer, tungsten, chromium, molybdenum, and tantalum are cited.

Citation List

Patent Document

Patent Document 1: PCT International Publication No. WO2021/193631

SUMMARY OF THE INVENTION

PROBLEM TO BE SOLVED BY THE INVENTION

The electrode is used as an electrode for electrochemical measurement, and is required to have excellent activity responsive to a ferricyan compound.
Further, the electrode is required to suppress the change in surface resistance after a long time.
The present invention provides an electrode and an electrochemical measurement system that have excellent activity responsive to a ferricyan compound and can suppress the change in surface resistance after a long time.

MEANS FOR SOLVING THE PROBLEM

The present invention [1] includes an electrode including: a substrate; a niobium layer; and a conductive carbon layer in order toward one side in a thickness direction, wherein the niobium layer has a thickness of 5 nm or more.
The present invention [2] includes the electrode described in the above-described [1], wherein the thickness of the niobium layer is 10 nm or more.
The present invention [3] includes the electrode described in the above-described [1], wherein the thickness of the niobium layer is 20 nm or more.
The present invention [4] includes the electrode described in the above-described in any one of the above-described [1] to [3], wherein with respect to a surface resistance R0 of a one-side surface of the electrode in the thickness direction, a ratio ([R1-R0]/R0) of a value obtained by subtracting the surface resistance R0 from a surface resistance R1 of the one-side surface after the electrode is left to stand at 40°C and 92%RH for 240 hours is 0.10 or less.
The present invention [5] includes the electrode described in any one of the above-described [1] to [4], wherein the substrate is a resin film.
The present invention [6] includes the electrode described in the above-described [5], being an electrode for an electrochemical measurement.
The present invention [7] includes an electrochemical measurement system including: the electrode described in the above-described [6].

EFFECTS OF THE INVENTION

The electrode of the present invention includes a niobium layer between a substrate and a conductive carbon layer, and thus has excellent activity responsive to a ferricyan compound.
The niobium layer has a thickness of 5 nm or more, and thus the change in surface resistance after a long time can be suppressed.
The electrochemical measurement system has excellent sensitivity to a ferricyan compound and excellent reliability of the sensitivity for a long period of time.

BRIEF DESCRIPTION OF THE DRAWINGS

FIG. 1 shows a cross-sectional view of one embodiment of an electrode of the present invention.
FIG. 2 is a schematic view of one embodiment of an electrochemical measurement system of the present invention.
FIGS. 3A and 3B describe a post-abrasion continuity test. FIG. 3A is an embodiment in which an electrode is abraded by a pencil. FIG. 3B is an embodiment in which a sample is made from the electrode shown in FIG. 3A, and the sample is subjected to a continuity test.

DESCRIPTION OF THE EMBODIMENT

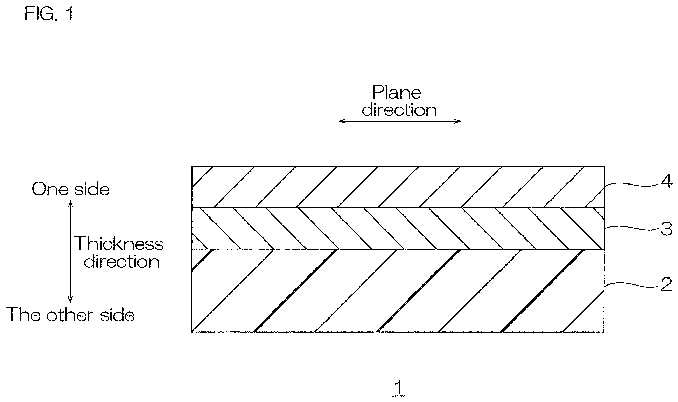

With reference to FIG. 1, one embodiment of an electrode of the present invention is described.

1. Electrode 1

As shown in FIG. 1, an electrode 1 has a thickness. The electrode 1 extends in a plane direction. The plane direction is perpendicular to the thickness direction. The electrode 1 has a film shape or a sheet shape. The film and sheet are not distinguished. The electrode 1 has a thickness of, for example, 2 $\mu$m or more, preferably 10 $\mu$m or more, and is, for example, 1000 $\mu$m or less, preferably 500 $\mu$m or less.
In the present embodiment, the electrode 1 includes a substrate 2, a niobium layer 3, and a conductive carbon layer 4 in this order toward one side in the thickness direction.

1.1 Substrate 2

The substrate 2 is disposed in the other end portion of the electrode 1 in the thickness direction. The substrate 2 extends in the plane direction. The substrate 2 has a film shape or a sheet shape. Examples of the material of the substrate 2 include resin, ceramics, and metal. As the material of the substrate 2, preferably a resin is used from the viewpoint of ensuring the flexibility of the substrate 2. In other words, the substrate 2 is preferably a resin film. When the material is ceramic, the substrate 2 is ceramic foil. When the material is a metal, the substrate 2 is metal foil. The substrate 2 has flexibility.
Examples of the resin include polyester resin, acetate resin, polyether sulfone resin, polycarbonate resin, polyamide resin, polyimide resin, polyolefin resin, (meth)acrylic resin, polyvinyl chloride resin, polyvinylidene chloride resin, polystyrene resin, polyvinyl alcohol resin, polyarylate resin, and polyphenylene sulfide resin. The resins can be used alone or in combination of two or more. As the resin, preferably polyester resin is used, and preferably polyethylene terephthalate is used. The substrate 2 has a thickness of, for example, 1.9 $\mu$m or more, preferably 9 $\mu$m or more, and is, for example, 999 $\mu$m or less, preferably 499 $\mu$m or less.

1.2 Niobium layer 3

The niobium layer 3 is disposed on a one-side surface of the substrate 2 in the thickness direction. The niobium layer 3 is in contact with the one-side surface of the substrate 2 in the thickness direction. The niobium layer 3 extends in the plane direction. The niobium layer 3 is an underlying layer. The underlying layer assists the electrical conductivity of the conductive carbon layer 4.
The niobium layer 3 has a thickness of 5 nm or more. When the thickness of the niobium layer 3 is less than 5 nm, the activity responsive to a ferricyan compound decreases.
The thickness of the niobium layer 3 is preferably 8 nm or more, more preferably 10 nm or more, even more preferably 15 nm or more, particularly preferably 20 nm or more, even more preferably 25 nm or more, even more preferably 45 nm or more, particularly preferably 60 nm or more. When the thickness of the niobium layer 3 is the above-described lower limit or more, the abrasion properties are excellent, the reliability of the sensitivity is excellent for a long period of time, and the surface resistance can be reduced. The abrasion properties include a property of ensuring the electrical conductivity of the conductive carbon layer 4 in case of abrasion by a hard foreign substance.
The upper limit of the thickness of the niobium layer 3 is not limited. The upper limit of the thickness of the niobium layer 3 is, for example, 1,000 nm, further 500 nm, or even 100 nm. Both the thickness of the niobium layer 3 and the thickness of the conductive carbon layer 4 are determined, for example, in the following manner.
A method of measuring the thickness of the niobium layer 3 and the thickness of the conductive carbon layer 4 is described below. Specifically, an X-ray reflectivity method is used as its measurement principle, and the X-ray reflectivity is measured using a powder X-ray diffractometer (manufactured by Rigaku Corporation, "RINT-2200") under the following "Measurement Conditions", and the obtained measurement data is analyzed by an analysis software (manufactured by Rigaku Corporation, "GXRR3"), thereby calculating the thickness of the niobium layer 3 and the thickness of the conductive carbon layer 4.

For the analysis, in the following <Analysis Conditions>, the three-layer model of the substrate 2, the niobium layer 3, and the conductive carbon layer 4 is employed, and the target thickness and a density $8.57 g/cm^3$ of the niobium layer 3 are input as initial values while the target thickness and a density $1.95 g/cm^3$ of the conductive carbon layer 4 are input as initial values. Thereafter, the thickness of the niobium layer 3 and the thickness of the conductive carbon layer 4 are calculated by carrying out the least squares fitting with the measured values, respectively.

<Measurement Conditions>

Measurement device: Powder X-ray diffractometer (manufactured by Rigaku Corporation, "RINT-2000")
Light source: Cu-K $\alpha$ rays (wavelength: 1,5418 Å), 40kV, 40mA
Optical system: Parallel beam optical system
Divergence slit: 0.05 mm
Light receiving slit: 0.05 mm
Monochromatization-Paralellization: A multi-layered Goebel mirror was used.
Measurement mode: $\theta/2\theta$ scan mode
Measurement range ($2\theta$): 0.3-2.0°

<Analysis conditions>

Analysis software: "GXRR3" manufactured by Rigaku Corporation
Analysis technique: Least squares fitting
Analysis range ($2\theta$):$2\theta$ = 0.3-2.0°

1.3 Conductive Carbon Layer 4

The conductive carbon layer 4 is disposed at one end portion of the electrode 1 in the thickness direction. The conductive carbon layer 4 is disposed on a one-side surface of the niobium layer 3 in the thickness direction. The conductive carbon layer 4 is in contact with the one-side surface of the niobium layer 3 in the thickness direction. The conductive carbon layer 4 is disposed on the opposite side to the substrate 2 with respect to the niobium layer 3 in the thickness direction.

The conductive carbon layer 4 may include, for example, an $sp^2$ bond and an $sp^3$ bond. When the conductive carbon layer 4 includes an $sp^2$ bond and an $sp^3$ bond, the conductive carbon layer 4 has a graphite structure and a diamond structure. The conductive carbon layer 4 may contain, for example, oxygen in addition to carbon. Furthermore, the conductive carbon layer 4 is allowed to contain a trace amount of inevitable impurities other than oxygen.

The conductive carbon layer 4 has a thickness of, for example, 0.1 nm or more, preferably 0.2 nm or more, and 100 nm or less, preferably 50 nm or less.

1.4 Physical Properties of Electrode 1

With respect to a surface resistance R0 of a one-side surface of the electrode 1 in the thickness direction, the ratio ([R1-R0]/R0) of the value obtained by subtracting the surface resistance R0 from a surface resistance R1 of the one-side surface after the electrode 1 is left to stand at 40°C and 92%RH for 240 hours is, for example, 2.00 or less, preferably 1.0 or less, more preferably 0.50 or less, even more preferably 0.20 or less, even more preferably 0.10 or less, 0.04 or less, 0.02 or less, 0.01 or less, less than 0.01, and is, for example, -0.10 or more, preferably -0.05 or more. When the above-described ratio ([R1-R0]/R0) is the above-described upper limit or less, the reliability of the sensitivity is excellent for a long period of time. The surface resistances R0 and R1 are determined as follows.

The electrode 1 is cut into a size $50\times50mm$. The absolute value of resistance is measured by eddy-current testing using an NC-80LINE manufactured by NAPSON. The non-contact measuring probe unit is swept, and the average values of the sheet resistance values excluding the data on both ends of 10 mm are used as the surface resistances R0 and R1.

1.5 Method of Producing Electrode 1

In this method, first, a substrate 2 is prepared.

In this method, next, a niobium layer 3 is formed on a one-side surface of the substrate 2 in the thickness direction. The method of forming a niobium layer 3 is not particularly limited. Examples of the method of forming the niobium layer 3 include a dry method and a wet method. As the method of forming the niobium layer 3, preferably a dry method is used. Examples of the dry method include a PVD method (physical vapor deposition method) and a CVD method (chemical vapor deposition method). Preferably, a PVD method is used. Examples of the PVD method include sputtering, vacuum deposition, laser deposition, and ion plating. As PVD, preferably, sputtering is used. The target in sputtering is, for example, niobium. Electricity can be applied to the target. The target has, for example, a plate shape. The electricity is appropriately set, corresponding to the thickness of the niobium layer 3. Examples of the sputtering gas include an inert gas. Examples of the inert gas include Ar. The pressure in the sputtering is, for example, 0.01 Pa or more and 5 Pa or less. The film forming temperature is, for example, -10°C or more, preferably 20°C or more, and, for example, 200°C or less, preferably 150°C or less.

In this method, next, a conductive carbon layer 4 is formed on a one-side surface of the niobium layer 3 in the thickness direction. The method of forming the conductive carbon layer 4 is not particularly limited. The conductive carbon layer 4 may be formed by the same method as the method of forming the niobium layer 3, and is preferably formed by sputtering. The target in the sputtering is, for example, sintered carbon.

1.6 Applications

The application of the electrode 1 is not limited. The electrode 1 can preferably be used as an electrode for electrochemical measurement for carrying out an electrochemical measurement, in particular as a working electrode (working pole) for carrying out cyclic voltammetry (CV).

Examples of the object of the electrochemical measurement (object to be measured) include a ferricyan compound. Examples of the ferricyan compound include potassium ferricyanide and sodium ferricyanide.

1.7 Electrochemical Measurement System

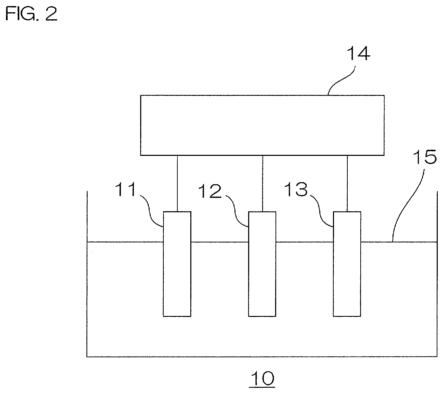

With reference to FIG. 2, one embodiment of the electrochemical measurement system of the present invention is described.

An electrochemical measurement system 10 includes a working electrode 11, a reference electrode 12, a counter electrode 13, a potentiostat 14, and an ammeter (not shown).

The working electrode 11 includes the electrode 1 described above. In other words, the electrochemical measurement system 10 includes the electrode 1 described above. That is, the electrode 1 is used for electrochemical measurements.

Examples of the reference electrode 12 include a silver/silver chloride electrode, a saturated calomel electrode, and a standard hydrogen electrode.

Examples of the counter electrode 13 include a platinum electrode, a gold electrode, and a nickel electrode.

The above-described working electrode 11, reference electrode 12, and counter electrode 13 can be immersed in a target solution 15. The target solution 15 includes the above-described object to be measured. For example, when CV is carried out, a potential applied to the working electrode 11 (carbon electrode 1) is applied, and is scanned.

1.8 Operations and Effects of One Embodiment

As shown in FIG. 1, the electrode 1 includes the niobium layer 3 between the substrate 2 and the conductive carbon layer 4. Therefore, the electrode 1 has excellent activity responsive to a ferricyan compound.

The thickness of the niobium layer 3 is 5 nm or more, and thus the change in surface resistance after a long time can be suppressed.

When the thickness of the niobium layer 3 is 10 nm or more, the abrasion properties are excellent, the reliability of the sensitivity is excellent for a long period of time, and the surface resistance can be reduced. When the thickness of the niobium layer 3 is 10 nm or more, in particular, the surface resistance can remarkably be reduced.

When the thickness of the niobium layer 3 is 20 nm or more, the abrasion properties are excellent, the reliability of the sensitivity is excellent for a long period of time, and the surface resistance can be reduced.

As shown in FIG. 2, the electrochemical measurement system 10 includes the above-described electrode 1 (see FIG. 1), and thus the sensitivity to a ferricyan compound is excellent, and the reliability of the sensitivity is also excellent for a long period of time.

2. Modified Examples

Although not shown, the electrode 1 may further include a hard coat layer. For example, the hard coat layer is disposed on an other-side surface of the substrate 2 in the thickness direction.

Examples

With reference to Examples and Comparative Examples below, the present invention is more specifically described. The present invention is not limited to Examples and Comparative Examples in any way. The specific numeral values used in the description below, such as blending ratios (content ratios), physical property values, and parameters, can be replaced with the corresponding blending ratios (content ratios), physical property values, and parameters in the above-described "DESCRIPTION OF THE EMBODIMENT", including the upper limit values (numeral values defined with "or less" or "less than") or the lower limit values (numeral values defined with "or more" or "more than").

Example 1

First, a substrate 2 made of polyethylene terephthalate having a thickness of 100 $\mu$m was prepared.
Then, a niobium layer 3 was formed on a one-side surface of the substrate 2 in the thickness direction by sputtering. The niobium layer 3 had a thickness of 5nm. The sputtering conditions are described below.
Target material: Niobium (Nb)
Sputtering gas: Ar
Sputtering pressure: 0.2 Pa
Target power: 0.4 W/cm$^2$
Film formation temperature: 40°C

Thereafter, a conductive carbon layer 4 was formed on a one-side surface of the niobium layer 3 in the thickness direction by sputtering. The thickness of the conductive carbon layer 4 was 10 nm. The sputtering conditions are described below.
Sputtering gas: Ar
Sputtering pressure: 0.2 Pa
Targeted power: 3 W/cm$^2$
Film formation temperature: 40°C

In this manner, an electrode 1 was produced.
Examples 2 to 7 and Comparative Example 3
An electrode 1 was obtained in the same manner as in Example 1. However, the thickness of the niobium layer 3 was changed according to the description in Table 1.

Comparative Examples 1 and 2

An electrode 1 was obtained in the same manner as in Example 1. However, according to the description in Table 1, a titanium layer was formed instead of a niobium layer 3, and the thickness of the titanium layer was also changed.

[Evaluations]

1.1 Activity Responsive to Potassium Ferricyanide

For the electrode 1 of each of Examples 1 to 3, the activity responsive to potassium ferricyanide was evaluated. The results are shown in Table 1.
Specifically, an insulating tape having a 2 mm-diameter hole was attached to a one-side surface of a conductive carbon layer 4 to prepare a sample of electrode having a known electrode area. Cyclic voltammetry (CV) was carried out using the sample of electrode as a working electrode. Specifically, the sample of electrode was immersed in a 1M KCl aqueous solution. As an electrode active substance, 1 mM of $[Fe(CN)_6]^{4-}$ (ferricyanide ion) was added to the aqueous solution. In the CV measurement, the sweep of the potential was started from 0 V, and the potential was swept from the positive side to the negative in a range of -0.1 V to 0.5 V. The sweep rate of the potential was 0.1 V/s. The CV measurement was carried out at 23°C. The CV measurement was carried out three times. The average of the ΔEp values of the three CV measurements was obtained as the initial ΔEp. The ΔEp was determined as the activity of the electrode 1 responsive to potassium ferricyanide.

1.2 Surface Resistance R0

The surface resistance R0 of each of the electrodes 1 of Examples 1 to 3 was obtained. The results are shown in Table 1.

More specifically, the surface resistance R0 of the one-side surface of the electrode 1 in the thickness direction was measured. To measure the surface resistance R0, the electrode 1 of each of Examples and Comparative Examples were cut into 50×50mm size, and the absolute value of the resistance was measured by eddy current measurement using an NC-80 LINE manufactured by NAPSON.

The non-contact measuring probe unit was swept, and the average value of the values of the sheet resistance excluding the data on both ends of 10 mm was determined as the surface resistance.

1.3 Ratio (Ratio of Change in Surface Resistance after Long Time)

For the electrode 1 of each of Example 1 to Comparative Example 3, the ratio of the change in surface resistance after a long time was obtained. The results are shown in Table 1.

(1) First, the surface resistance R0 of the above-described "1.2 Surface Resistance R0" was used as a reference of the change in surface resistance.

(2) The electrode 1 was then left to stand at 40°C and 92%RH for 240 hours. Thereafter, the surface resistance R1 of the one-side surface of the electrode 1 after the electrode 1 was left to stand was measured. The surface resistance R1 was obtained in the same manner as the measurement of the surface resistance R0.

(3) The ratio (ratio of the change in surface resistance after a long time) was determined by substituting each of R0 and R1 into the following formula.

$$\text{Ratio} = ([R1-R0]/R0)$$

1.4 Continuity Test after Abrasion by Pencil

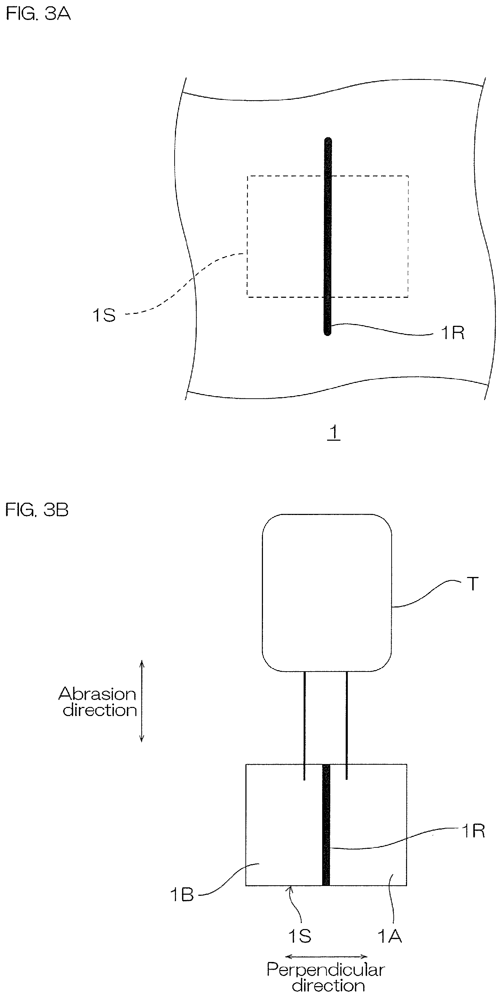

As shown in FIG. 3A, the one-side surface of the electrode 1 of each of Examples 1 to 7 was abraded by a pencil along one direction. The conditions for the abrasion are described below.

Load: 500 g
Abrasion rate: 1 mm/sec
Abrasion length: 10 mm
Pencil Hardness: F, H, 2H, 3H

After the abrasion, as shown in FIG. 3B, the outer shape of the electrode 1 was trimmed so that the electrode 1 includes an intermediate portion of the abraded part in the abrasion direction (corresponding to one direction), thereby obtaining a sample 1S. An abraded part 1R is continuously present in one end portion, the middle portion, and the other end portion of the sample 1S in the abrasion direction. In this manner, in a direction perpendicular to the abrasion direction and the thickness direction, two unabraded regions 1A and 1B are separated by the abraded part 1R. That is, an electric path between the two unabraded regions 1A and 1B passes through (traverses) the abraded part 1R.

By using each pencil hardness F, H, 2H, 3H, the continuity between the two unabraded regions 1A and 1B was confirmed by a tester T.

By using each pencil hardness F, H, 2H, 3H, the test was carried out five times. The continuity after abrasion by a pencil was evaluated as follows.

○: Three or more were conducted.
△: One or two was/were conducted.

×: Zero was conducted.

The results are shown in Table 2

Table 1

Table 1

| | Metal underlying layer | | Activity responsive to potassium ferricyanide | Reliability of change in surface resistance at 40°C and 92%RH (240 h) | Surface resistance R0 (Ω/□) |
|---|---|---|---|---|---|
| | Type | Thinckness (nm) | | | |
| Ex. 1 | Niobium layer | 5 | 0.10 | 1.96 | 588 |
| Ex. 2 | Niobium layer | 7 | 0.10 | 0.86 | 262 |
| Ex. 3 | Niobium layer | 9 | 0.09 | 0.23 | 143 |
| Ex. 4 | Niobium layer | 18 | 0.09 | 0.04 | 35.5 |
| Ex. 5 | Niobium layer | 27 | 0.09 | 0.02 | 20.2 |
| Ex. 6 | Niobium layer | 41 | 0.09 | 0.01 | 11.9 |
| Ex. 7 | Niobium layer | 81 | 0.09 | 0.02 | 5.1 |
| Comp. Ex. 1 | Titanium layer | 9 | 0.12 | 1.17 | 270 |
| Comp. Ex. 2 | Titanium layer | 65 | 0.12 | 0.01 | 10 |
| **Comp.** Ex. 3 | Niobium layer | 3 | 0.14 | Unmeasurable | 1733 |

Table 2

Table 2

| | Metal underlying layer | | Continuity test after abrasion by pencil | | | |
|---|---|---|---|---|---|---|
| | Type | Thinckness (nm) | F | H | 2H | 3H |
| Ex. 1 | Niobium layer | 5 | ○ | ○ | × | × |
| Ex. 2 | Niobium layer | 7 | ○ | ○ | × | × |
| Ex. 3 | Niobium layer | 9 | ○ | ○ | × | × |
| Ex. 4 | Niobium layer | 18 | ○ | ○ | × | × |
| Ex. 5 | Niobium layer | 27 | ○ | ○ | △ | × |
| Ex. 6 | Niobium layer | 41 | ○ | ○ | △ | △ |
| Ex. 7 | Niobium layer | 81 | ○ | ○ | ○ | △ |

Description of Reference Numerals

1 Electrode
2 Substrate
3 Niobium layer
4 Conductive carbon layer
10 Electrochemical measurement system
R0 Surface resistance of the one-side surface of the electrode before the electrode is left to stand

R1 Surface resistance of the one-side surface of the electrode after the electrode is left to stand at 40°C and 92%RH for 240 hours
R0 Surface resistance

While the illustrative embodiments of the present invention are provided in the above description, such is for illustrative purpose only and it is not to be construed as limiting in any manner. Modification and variation of the present invention that will be obvious to those skilled in the art is to be covered by the following claims.

Industrial Applicability

The electrode and electrochemical measurement system of the present invention are preferably used in various fields of electrochemical measurement.

**Claims**

1. An electrode comprising: a substrate; a niobium layer; and a conductive carbon layer in order toward one side in a thickness direction,
   wherein the niobium layer has a thickness of 5 nm or more.

2. The electrode according to claim 1,
   wherein the thickness of the niobium layer is 10 nm or more.

3. The electrode according to claim 1,
   wherein the thickness of the niobium layer is 20 nm or more.

4. The electrode according to claim 3,
   wherein with respect to a surface resistance R0 of a one-side surface of the electrode in the thickness direction, a ratio ([R1-R0]/R0) of a value obtained by subtracting the surface resistance R0 from a surface resistance R1 of the one-side surface after the electrode is left to stand at 40°C and 92%RH for 240 hours is 0.10 or less.

5. The electrode according to any one of claims 1 to 4,
   wherein the substrate is a resin film.

6. The electrode according to claim 5, being an electrode for an electrochemical measurement.

7. An electrochemical measurement system comprising: the electrode according to claim 6.

FIG. 1

FIG. 2

10

FIG. 3A

1S

1R

1

FIG. 3B

T

Abrasion
direction

1R

1B

1S          1A

Perpendicular
direction

## INTERNATIONAL SEARCH REPORT

<table>
<tr><td>International application No.</td></tr>
<tr><td>PCT/JP2023/040725</td></tr>
</table>

**A. CLASSIFICATION OF SUBJECT MATTER**

*G01N 27/30*(2006.01)i; *B32B 9/00*(2006.01)i; *B32B 9/04*(2006.01)i; *B32B 15/04*(2006.01)i; *B32B 15/08*(2006.01)i; *B32B 27/06*(2006.01)i

FI:  G01N27/30 B; B32B9/00 A; B32B9/04; B32B15/04 Z; B32B15/08 P; B32B27/06

According to International Patent Classification (IPC) or to both national classification and IPC

**B. FIELDS SEARCHED**

Minimum documentation searched (classification system followed by classification symbols)

G01N27/26-27/49; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/193631 A1 (NITTO DENKO CORP) 30 September 2021 (2021-09-30) paragraphs [0013]-[0033], [0086], fig. 1 | 1-7 |
| X | JP 2000-314714 A (CANON INC) 14 November 2000 (2000-11-14) paragraphs [0039]-[0052], fig. 1, 5 | 1-3, 6-7 |
| X | JP 2005-060146 A (SHARP CORP) 10 March 2005 (2005-03-10) paragraphs [0035]-[0043], [0072], fig. 1 | 1-3, 6-7 |
| X | CN 115335690 A (ZHU, ZICHENG) 11 November 2022 (2022-11-11) paragraphs [0014], [0036]-[0042], [0072], fig. 1-3 | 1-7 |
| P, X | WO 2023/190657 A1 (NITTO DENKO CORP) 05 October 2023 (2023-10-05) paragraphs [0017]-[0036], fig. 1 | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/040725**

| Patent document cited in search report | | | Publication date (day/month/year) | Patent family member(s) | | | Publication date (day/month/year) |
|---|---|---|---|---|---|---|---|
| WO | 2021/193631 | A1 | 30 September 2021 | US | 2023/0128978 | A1 | |
| | | | | paragraphs [0014]-[0051], [0124], fig. 1 | | | |
| | | | | EP | 4130728 | A1 | |
| | | | | CN | 115398217 | A | |
| JP | 2000-314714 | A | 14 November 2000 | (Family: none) | | | |
| JP | 2005-060146 | A | 10 March 2005 | (Family: none) | | | |
| CN | 115335690 | A | 11 November 2022 | WO | 2021/192248 | A1 | |
| WO | 2023/190657 | A1 | 05 October 2023 | (Family: none) | | | |

Form PCT/ISA/210 (patent family annex) (July 2022)

**EP 4 624 914 A1**

**Patent documents cited in the description**

- WO 2021193631 A